# EUROPEAN PATENT APPLICATION

(11) **EP 4 410 406 A1**
(43) Date of publication of application: **07.08.2024**
(21) Application number: 22875387.7
(22) Date of filing: 16.03.2022
(51) Int. Cl.: B01D 61/10, B01D 65/06, B01D 71/56, C11D 17/08, C11D 1/02, C11D 3/20, C11D 3/26, C11D 3/34, C11D 3/36

(54) **CLEANING AGENT, CLEANING LIQUID AND CLEANING METHOD FOR AROMATIC POLYAMIDE REVERSE OSMOSIS MEMBRANES**

(30) Priority: 29.09.2021 JP 2021159591
(71) Applicant: Kurita Water Industries Ltd., Tokyo 164-0001 (JP)
(72) Inventor: FUJII, Akihiro, Singapore, 637141 (SG); Wong Xin Yee, Singapore, 637141 (SG)
(74) Representative: Hoffmann Eitle
(86) International application number: PCT/JP2022/011877
(87) International publication number: WO 2023/053504

(57) **Abstract**

The present invention provides a cleaning agent, a cleaning liquid, and a cleaning method, which are capable of effectively removing a contaminant that is not able to be sufficiently removed by conventional cleaning liquids in cases where aromatic polyamide reverse osmosis membranes used in water treatments are contaminated and the performances of the aromatic polyamide reverse osmosis membranes such as the permeation flux and the desalination rate are deteriorated. The present invention provides a cleaning agent for aromatic polyamide reverse osmosis membranes, the cleaning agent being composed of an aqueous solution which has a pH of 13 or more and contains a stabilized halogen, a chelating agent that contains one or more substances selected from among aliphatic carboxylic acids containing no amino group, phosphonic acid compounds containing no amino group, polyphosphoric acids, and salts thereof, and an alkaline agent. According to the present invention, an aromatic polyamide reverse osmosis membrane is cleaned with use of a cleaning liquid that is composed of an aqueous solution of this cleaning agent. A chloramine compound which is obtained by mixing a compound having a primary amino group with hypochlorous acid and/or a hypochlorite is suitable for use as the stabilized halogen.

## Description

### [Technical Field]

The present invention relates to a cleaning agent, a cleaning liquid, and a cleaning method for aromatic polyamide reverse osmosis membranes, which are used in the field of water treatment. Specifically, the present invention relates to a cleaning agent for effectively recovering the performance of aromatic polyamide reverse osmosis membranes in cases where the aromatic polyamide reverse osmosis membranes are contaminated and the membrane performance of the aromatic polyamide reverse osmosis membranes such as the permeation flux and the blocking rate deteriorates, a cleaning liquid containing this cleaning agent, and a cleaning method for aromatic polyamide reverse osmosis membranes with use of this cleaning liquid.

### [Background Art]

Currently, desalination of salt water or waste water recovery, which uses permeable membranes such as reverse osmosis (RO) membranes, is being carried out as a countermeasure against the global shortage of water supply. In systems using these permeable membranes, the performance deterioration due to contamination of permeable membranes has become a problem, and thus it is desirable to develop a cleaning technology that effectively restores the performance of contaminated permeable membranes.

In recent years, aromatic polyamide-based RO membranes that can be operated at a low pressure and have excellent desalination performance have come to be widely used as RO membranes for water treatment. However, due to having low resistance to chlorine, the aromatic polyamide RO membrane cannot be treated by bringing it into contact with chlorine under operating conditions like the cellulose acetate-based RO membrane, and thus there is a problem that contamination by microorganisms and organic matter is likely to occur as compared with the cellulose acetate-based RO membrane. On the other hand, the resistance to alkali is higher in the aromatic polyamide RO membrane than in the cellulose acetate RO membrane, and thus it is possible to carry out cleaning under an alkaline condition of a pH of 10 or more.

Patent Literature 1 describes, as a cleaning agent for alkali-resistant aromatic polyamide RO membranes, a cleaning agent composed of an aqueous solution which has a pH of 13 or more and contains a chloramine compound, a surfactant such as an alkylbenzene sulfonate, and an alkaline agent.

Paragraph 00512 of Patent Literature 1 describes that a chelating agent such as EDTA may be further blended to enhance the effect of peeling of membrane contaminants.

However, it has been observed that in a case where an amine-based chelating agent such as EDTA is blended with the cleaning agent of Patent Literature 1, it reacts with the chloramine compound, and the chloramine compound is inactivated.

### [Citation List]

### [Patent Literature]

### [Patent Literature 1]

Patent Literature 1: Japanese Patent Laid-Open No. 2015-97991

### [Summary of Invention]

### [Technical Problem]

An objective of the present invention is to provide a cleaning agent, a cleaning liquid, and a cleaning method, which are capable of effectively removing a contaminant that is not able to be sufficiently removed by conventional cleaning agents in cases where aromatic polyamide RO membranes are contaminated and the membrane performance of the aromatic polyamide RO membranes such as the permeation flux and the desalination rate deteriorates.

### [Solution to Problem]

The present invention is summarized as follows.
[1] A cleaning agent for aromatic polyamide reverse osmosis membranes, the cleaning agent being composed of:
   an aqueous solution which has a pH of 13 or more and contains a stabilized halogen, a chelating agent that contains one or more substances selected from among aliphatic carboxylic acids containing no amino group, phosphonic acid compounds containing no amino group, polyphosphoric acids, and salts thereof, and an alkaline agent.
[2] The cleaning agent for aromatic polyamide reverse osmosis membranes according to [1], in which a concentration of the stabilized halogen in the cleaning agent is 0.1 to 0.5 M, a concentration of the chelating agent is 0.2 to 2 M, and, a concentration of the alkaline agent is 1 to 5 M.
[3] The cleaning agent for aromatic polyamide reverse osmosis membranes according to [1] or [2], in which the stabilized halogen includes monochlorosulfamic acid.
[4] The cleaning agent for aromatic polyamide reverse osmosis membranes according to any one of [1] to [3], in which the alkaline agent is at least one of sodium hydroxide and potassium hydroxide.
[5] The cleaning agent for aromatic polyamide reverse osmosis membranes according to any one of [1] to [4], in which the cleaning agent contains an anionic surfactant having a molecular weight of less than 1,000, which does not have an amino group or an amine oxide in a molecular structure.
[6] The cleaning agent for aromatic polyamide reverse osmosis membranes according to [5], in which a concentration of the anionic surfactant in the aqueous solution is 0.002 to 0.5 M.
[7] The cleaning agent for aromatic polyamide reverse osmosis membranes according to any one of [1] to [6], in which the stabilized halogen is a reactant of one or more substances selected from the group consisting of a compound having a primary amino group, ammonia, and an ammonium salt, and hypochlorous acid and/or hypochlorite.
[8] A cleaning liquid for aromatic polyamide reverse osmosis membranes, the cleaning liquid being composed of:
   a diluted aqueous solution of the cleaning agent for aromatic polyamide reverse osmosis membranes according to any one of [1] to [7].
[9] The cleaning liquid for aromatic polyamide reverse osmosis membranes according to [8], in which a pH of the cleaning liquid is 11 to 13.
[10] A cleaning method for aromatic polyamide reverse osmosis membranes, the cleaning method including:
   a step of bringing an aromatic polyamide reverse osmosis membrane into contact with the cleaning liquid according to [8] or [9].

### [Advantageous Effects of Invention]

According to the present invention, it is possible to apply a chlorine-based cleaning agent component even in a case of an aromatic polyamide RO membrane having low chlorine resistance. As a result, the effect of sterilization and organic matter decomposition by the stabilized halogen, as well as the cleaning effect by a specific chelating agent, is imparted in addition to the peeling effect and the hydrolysis effect under alkaline conditions, and these effects work synergistically, thereby effectively restoring the performance of the aromatic polyamide reverse osmosis membrane with a favorable alkaline cleaning effect.

### [Brief Description of Drawings]

Fig. 1 is a schematic view showing a configuration of a flat membrane test apparatus that is used in Examples.
Fig. 2 is a cross-sectional view showing a structure of an airtight container of the flat membrane test apparatus of Fig. 1.
Fig. 3 is a graph showing measurement results of Test Example 1.

### [Description of Embodiments]

Embodiments of the present invention will be described in detail below.

A cleaning agent for aromatic polyamide reverse osmosis membranes according to the present invention is composed of an aqueous solution which has a pH of 13 or more and contains a stabilized halogen, a chelating agent that contains one or more substances selected from among aliphatic carboxylic acids containing no amino group, polyphosphoric acids, and salts thereof, and an alkaline agent. A cleaning liquid for aromatic polyamide reverse osmosis membranes according to the present invention is composed of a diluted aqueous solution of this cleaning agent.

### <Aromatic polyamide reverse osmosis membrane>

In the present invention, a cleaning target is an aromatic polyamide reverse osmosis membrane (including a nanofiltration (NF) membrane).

### <Stabilized halogen>

In the present invention, the stabilized halogen that is used as a halogen-based cleaning agent component can be generated by mixing any of a compound having a primary amino group, ammonia, or an ammonium salt (hereinafter referred to as an "NH₂-based compound") with a halogen-based oxidizing agent such as a chlorine-based oxidizing agent or a bromine-based oxidizing agent. As the chlorine-based oxidizing agent, hypochlorous acid and/or hypochlorite is preferably used. In addition, examples of the bromine-based oxidizing agent include bromine (liquid bromine), bromine chloride, bromic acid, a bromate, and hypobromous acid. The stabilized halogen is preferably a chloramine compound, that is, a compound (XNHCl) obtained by substituting a hydrogen atom of an amino group with a chlorine atom, which is obtained by reacting hypochlorous acid (HOCl) and a compound (XNH₂) having a primary amino group through such a reaction as shown in the following reaction formula (1) or (2). Since this compound exhibits a weak oxidative action on membranes, it can be used as a cleaning agent even in the case of an aromatic polyamide RO membrane having low chlorine resistance.

XNH₂ + HOCl ↔ XNHCl + H₂O ··· (1)

XNH₂ + OCl⁻ ↔ XNHCl + OH⁻ ··· (2)

Examples of the compound having a primary amino group include an aliphatic amine, an aromatic amine, sulfamic acid, sulfanilic acid, sulfamoylbenzoic acid, and an amino acid.

In addition, examples of the ammonium salt include ammonium chloride and ammonium sulfate. One kind of these may be used alone, or two or more kinds thereof may be mixed and used in combination. Among these NH₂-based compounds, sulfamic acid (NH₂SO₂OH) is preferable. In a case where monochlorosulfamine is generated with use of sulfamic acid, the monochlorosulfamine becomes a stable chloramine compound. Sulfamic acid does not increase the TOC value of the cleaning agent because it does not contain carbon. In a case where sulfamic acid and an alkaline agent are used in combination, a very effective cleaning agent is obtained.

As a hypochlorite to be reacted with the NH₂-based compound, it is possible to use an alkali metal salt of hypochlorous acid such as sodium hypochlorite, an alkaline earth metal salt of hypochlorous acid such as calcium hypochlorite, or the like. One kind of these may be used alone, or two or more kinds thereof may be mixed and used in combination.

In a case of mixing the NH₂-based compound and the hypochlorous acid and/or hypochlorite to generate a chloramine compound, the NH₂-based compound and the hypochlorous acid and/or hypochlorite are preferably used so that a Cl₂/N molar ratio is 0.1 to 1, preferably 0.2 to 0.85, and more preferably 0.3 to 0.7 in terms of the generation efficiency and stability of chloramine, where the Cl₂/N molar ratio is a molar ratio of effective chlorine (Cl₂) derived from hypochlorous acid and/or hypochlorite to nitrogen atoms N derived from the NH₂-based compound.

In a case where the Cl₂/N molar ratio is larger than the upper limit described above, there is a possibility of generation of free chlorine, and in a case where it is smaller than the lower limit described above, the generation efficiency of chloramine is reduced with respect to the NH₂-based compound used.

In this case, the amount of the hypochlorous acid and/or hypochlorite is the amount of the chloramine compound in the alkaline aqueous solution containing the chloramine compound/surfactant.

### <Chelating agent>

The chelating agent that is used in the present invention is one or more compounds selected from among aliphatic carboxylic acids containing no amino group, phosphonic acid compounds containing no amino group, polyphosphoric acids, and salts thereof.

Examples of the aliphatic carboxylic acid containing no amino group include, in addition to succinic acid, malic acid, tartaric acid, citric acid, oxalic acid, and phosphonobutane-tricarboxylic acid (PBTC), a low-molecular-weight water-soluble polymer obtained by polymerizing or copolymerizing one or more kinds of monomers selected from the group consisting of acrylic acid, methacrylic acid, and maleic acid.

As the phosphonic acid compound containing no amino group, it is possible to use hydroxyethylidene diphosphonic acid (HEDP), hydroxyphosphonoacetic acid (HPAA), or the like. As the polyphosphoric acid, it is possible to use hexametaphosphoric acid, tetrapolyphosphoric acid, triphosphoric acid, or the like.

The salt is preferably a sodium salt or a potassium salt.

### <Alkaline agent>

The alkaline agent that is used in the cleaning agent according to the present invention is suitably a hydroxide of an alkali metal, such as sodium hydroxide or potassium hydroxide. One kind of these may be used alone, or two or more kinds thereof may be mixed and used in combination.

### <Surfactant>

The cleaning agent according to the present invention may include a surfactant. The surfactant is preferably an anionic surfactant having a molecular weight of 1,000 or less from the viewpoint of the cleaning effect. A surfactant having an excessively large molecular weight may not only not have a cleaning effect but may also contaminate membranes. In addition, the surfactant is preferably a surfactant that does not contain an amino group or an amine oxide in the molecular structure.

As such an anionic surfactant, it is possible to use one or more compounds among an alkylbenzene sulfonate such as sodium dodecylbenzene sulfonate, an alkyl sulfate such as sodium lauryl sulfate, an alkyl diphenyl ether disulfonate, an alkylnaphthalene sulfonate, a dialkyl sulfosuccinate, a polyoxyethylene alkyl ether sulfate, an α-sulfofatty acid methyl ester salt, an α-olefin sulfonate, and the like.

### <pH of cleaning agent and concentration of each component>

The pH of the cleaning agent according to the present invention is 13 or more. The concentration of the stabilized halogen in the cleaning agent is 0.1 to 0.5 M, the concentration of the chelating agent is 0.2 to 2 M, the concentration of the alkaline agent is 1 to 5 M, and the concentration of the surfactant is preferably 0.5 M, for example, 0.002 to 0.5 M.

### <pH of cleaning liquid and concentration of each component>

The cleaning liquid according to the present invention is composed of an aqueous solution that is obtained by diluting this cleaning agent with water. In a case where the pH of this cleaning liquid is less than 11, the permeation flux cannot be sufficiently restored. The higher the pH of the cleaning liquid, the better the cleaning effect. However, in a case where the pH of the cleaning liquid is too high, the handleability of the cleaning liquid deteriorates, and the risk of deterioration of the permeable membrane such as the RO membrane increases. The pH of the cleaning liquid is preferably 11 or more and 13 or less.

The concentration of the stabilized halogen such as the chloramine compound in the cleaning liquid is preferably 0.002 to 0.015 M and particularly preferably 0.005 to 0.01 M. In a case where the concentration of the stabilized halogen in the cleaning liquid is too low, a sufficient cleaning effect cannot be obtained, and in a case where the concentration of the stabilized halogen is too high, there is a risk of deterioration of the permeable membrane such as the RO membrane. Here, the concentration of the chloramine compound of 0.1 M is a concentration equivalent to 7,100 mg-Cl₂/L in terms of the total chlorine concentration. The total chlorine concentration can be measured according to the DPD method that is specified in JIS K0400-33-10. 1999, or the like.

The chloramine compound is used in the related art as a slime control agent for permeable membranes. The chloramine compound as a slime control agent is generally used at a low concentration of about 0.05 to 50 mg-Cl₂/L in terms of the total chlorine concentration. In this case, the pH thereof is less than 10. On the other hand, the cleaning liquid according to the present invention contains the chloramine compound at a high concentration as described above, has a high alkalinity of pH 11 or more, and has a high cleaning effect.

The concentration of the chelating agent in the cleaning liquid is preferably 0.004 to 0.06 M and particularly preferably 0.01 to 0.04 M.

In addition, the concentration of the surfactant in the cleaning liquid is preferably 0.0015 M or less and particularly preferably 0.00005 to 0.001 M.

### <Manufacturing methods for cleaning agent and cleaning liquid>

The cleaning agent according to the present invention can be prepared by adding an NH₂-based compound such as sulfamic acid to the above-described aqueous solution of the alkaline agent and dissolving the NH₂-based compound , and then adding hypochlorous acid and/or hypochlorite to the obtained aqueous solution of the NH₂-based compound and carry out mixing. The above-described aqueous solution of the alkaline agent is preferably such that the amount of water is set to 50% to 90% by weight. The chelating agent and surfactant may be added in any step in the preparation step of the cleaning agent or may be contained in advance in the above-described aqueous solution of the alkaline agent. In addition, they may be added when hypochlorous acid and/or hypochlorite is added to the aqueous solution of the NH₂-based compound or may be added before and after the addition of hypochlorous acid and/or hypochlorite. Preferably, the chelating agent or the surfactant is added after the addition of hypochlorous acid and/or hypochlorite.

A compound having a primary amino group, such as sulfamic acid, may be added in a form of a salt. Examples of this salt include those that are soluble when used as the alkaline aqueous solution containing the chloramine compound/surfactant, where sodium sulfamate, potassium sulfamate, ammonium sulfamate, or the like can be used. The NH₂-based compound is added so that the concentration of the chloramine compound in the cleaning agent according to the present invention is set to the above concentration. The adding amount of the NH₂-based compound is preferably such that the content ratio of the alkaline agent to the NH₂-based compound is set to 0.5 to 0.7 in terms of N/alkali metal (molar ratio). The NH₂-based compound can be added in a state of a powder or in a state of an aqueous solution. In a case where a sulfamate is used as the NH₂-based compound, the amount of the alkali metal contained in the sulfamate is added up as the amount of alkali. In a case where an aqueous solution is used, the amount of water contained in the aqueous solution is added up as the amount of water in the alkaline aqueous solution.

On the other hand, it is preferable that 5% to 20% by weight of hypochlorous acid and/or hypochlorite is added as the concentration of the effective chlorine (Clz), and preferably, the hypochlorous acid and/or hypochlorite is added as an aqueous solution of 10 to 15% by weight. Hypochlorous acid and/or hypochlorite is added so that the concentration of the chloramine compound in the cleaning agent according to the present invention is the above concentration, and the content ratio of the NH₂-based compound to the hypochlorous acid and/or hypochlorite is the Cl₂/N molar ratio described above. This makes it possible to efficiently manufacture the cleaning agent according to the present invention, which consists of an aqueous solution formulation that does not cause foaming or chlorine odor but are excellent in reactivity, stability, handling, absence of chlorine odor, and the like. Even in this case, it is preferable that hypochlorous acid and/or hypochlorite is gradually added to be mixed.

The cleaning liquid according to the present invention is manufactured by diluting the cleaning agent according to the present invention produced in this way, with water, preferably pure water. However, the cleaning liquid according to the present invention can be directly manufactured by the same method as above without using the cleaning agent according to the present invention.

### <Another cleaning agent component>

Another cleaning agent component may be added to the cleaning agent or cleaning liquid which is used in the present invention, as long as the effect of the cleaning agent or cleaning liquid is not impaired.

### <Cleaning method>

It is sufficient that in a method of cleaning an aromatic polyamide reverse osmosis membrane using the cleaning liquid according to the present invention, an aromatic polyamide reverse osmosis membrane is brought into contact with this cleaning liquid, and the method of cleaning an aromatic polyamide reverse osmosis membrane is not particularly limited. Usually, immersion cleaning is carried out, where a cleaning liquid is introduced into the raw water side of the permeable membrane module and allowed to stand.

There is no particular limit to the immersion cleaning time with the cleaning liquid, and the immersion cleaning time may be any time which makes it possible to obtain the target recovery rate of the membrane performance; however, it is usually about 2 to 24 hours.

After cleaning with the above-described cleaning liquid, finishing cleaning is usually carried out by allowing high-purity water such as pure water to pass through.

Here, before and after the cleaning of the aromatic polyamide reverse osmosis membrane according to the present invention, membrane cleaning with another cleaning liquid may be carried out. Before or after the cleaning of the aromatic polyamide reverse osmosis membrane using the cleaning liquid according to the present invention, cleaning with an alkaline aqueous solution containing no chloramine compound and no surfactant may be carried out. In addition, acid cleaning that is effective for removing scale or metal colloids may be carried out.

### [Examples]

### [Test Example 1] (Stability test of chloramine compound against chelating agent)

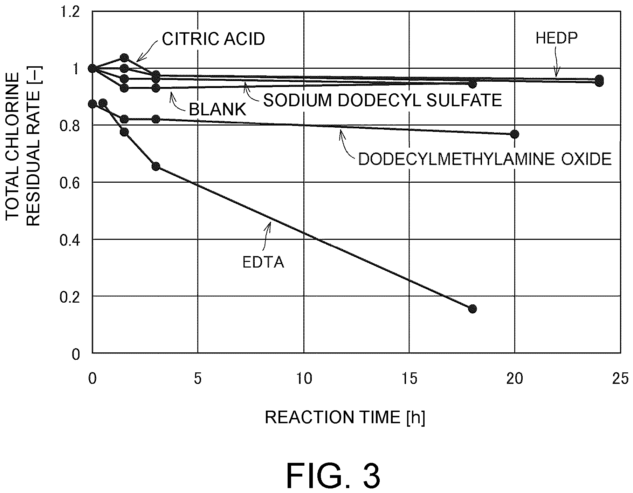

In order to test the reactivity between a chloramine compound used in the cleaning agent according to the present invention and a chelating agent, 10 g/L (0.05 M) HEDP as a chelating agent, 10 g/L (0.05 M) citric acid, 10 g/L (0.03 M) sodium dodecyl sulfate, 10 g/L (0.03 M) EDTA, or 10 g/L (0.04 M) dodecyldimethylamine oxide was added to 200 mL of an aqueous sodium hydroxide solution having a pH 12 and containing 0.005 M monochlorosulfamic acid, and residual chlorine was measured. Fig. 3 shows a temporal change in the residual rate of chlorine. As shown in Fig. 3, it was observed that the chloramine compound is easily degraded by amine-based EDTA or dodecyl dimethylamine oxide.

### [Test Example 2] Cleaning test (1) using combination of chloramine compound and chelating agent

Three kinds of cleaning liquids were prepared, where a cleaning liquid was obtained by adding EDTA to 0.5% as a chelating agent, a cleaning liquid was obtained by adding sodium triphosphate to 0.5%, and a cleaning liquid was obtained by adding sodium triphosphate to 2%, respectively, with respect to 200 mL of an aqueous sodium hydroxide solution having a pH 12 and containing 0.01 M monochlorosulfamic acid.

The following contaminated aromatic polyamide reverse osmosis membrane (hereinafter, referred to as RO membrane) was immersed in each of the cleaning liquids and subjected to stirring at 400 rpm for 6 hours at ordinary temperature, and then the cleaning effect was visually compared.

Contaminated RO membrane: An RO membrane obtained by cutting an RO membrane (an aromatic polyamide RO membrane "TML10" manufactured by Toray Industries, Inc.) contaminated with organic matter, which has been recovered from a waste water treatment plant, into a size of 8 cm × 5 cm.

### <Result>

As a result, it was observed that in a case where the cleaning was carried out with the cleaning liquid obtained by adding sodium triphosphate to 0.5% or the cleaning liquid obtained by adding sodium triphosphate to 2%, the effect of removing contaminants is high as compared with the cleaning liquid obtained by adding EDTA to 0.5%.

### [Test Example 3] Cleaning test (2) using combination of chloramine compound and chelating agent

A test was carried out in the same manner, except that in Test Example 2, HEDP was added to 1% or PBTC was added to 1% as a chelating agent with respect to 200 mL of an aqueous sodium hydroxide solution having a pH 12 and containing 0.01 M monochlorosulfamic acid. In addition, as a blank, a test was also carried out on a case where no chelating agent was added.

### <Result>

As a result, it was observed that the addition of HEDP or PBTC significantly improves the cleaning effect.

### [Example 1 and Comparative Examples 1 to 3]

Hereinafter, the present invention will be described more specifically with reference to Examples and Comparative Examples.

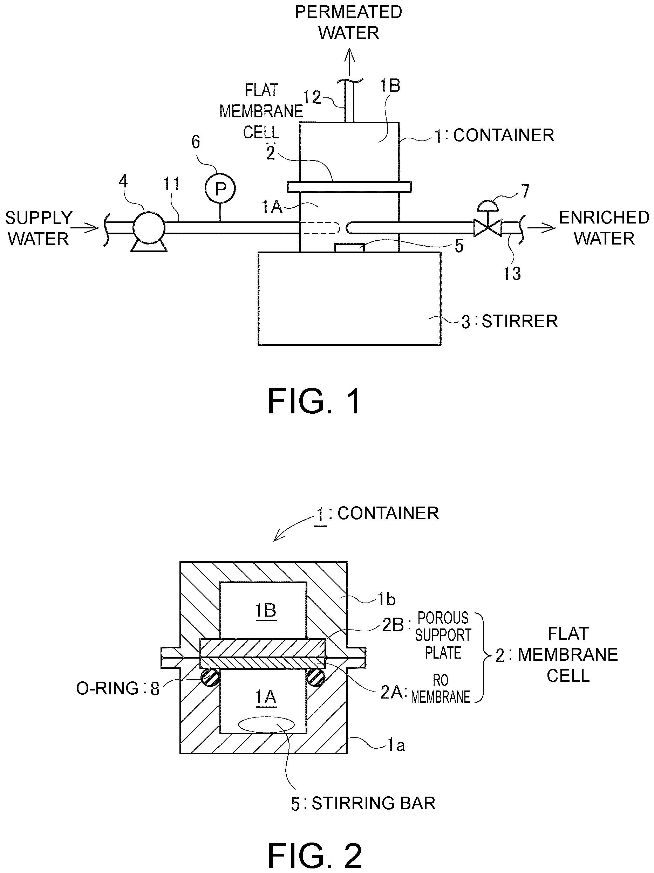

In Examples and Comparative Examples below, the flat membrane test apparatus shown in Figs. 1 and 2 and the following cleaning liquid were used to examine the cleaning effect of the RO membrane.

### <Flat membrane test apparatus>

In this flat membrane test apparatus, an RO membrane supply water is supplied by a high pressure pump 4 from a pipe 11 to a raw water chamber 1A on a lower side of a flat membrane cell 2 in an airtight container 1, where the RO membrane is set in the flat membrane cell 2. As shown in Fig. 2, the airtight container 1 is composed of a lower case 1a on the raw water chamber 1A side and an upper case 1b on the permeated water chamber 1B side, and it is fixed between the lower case 1a and the upper case 1b with the flat membrane cell 2 being interposed between O-rings 8. The flat membrane cell 2 is configured such that the permeated water side of the RO membrane 2Ais supported by a porous support plate 2B. The inside of the raw water chamber 1A on the lower side of the flat membrane cell 2 is subjected to stirring by rotating a stirring bar 5 with a stirrer 3. The RO membrane-permeated water is extracted from the pipe 12 through the permeated water chamber 1B on the upper side of the flat membrane cell 2. Enriched water is extracted from a pipe 13. The pressure in the airtight container 1 is adjusted by a pressure gauge 6 provided in a water supply pipe 11 and a pressure adjusting valve 7 provided in an enriched water extraction pipe 13.

### <Cleaning liquid>

Comparative Example 1: An aqueous sodium hydroxide solution having a pH 12 and containing only 0.01 M monochlorosulfamic acid
Comparative Example 2: An aqueous sodium hydroxide solution having a pH 12 and containing 0.01 M monochlorosulfamic acid and 0.026 M citric acid
Comparative Example 3: An aqueous sodium hydroxide solution having a pH 12 and containing 0.01 M monochlorosulfamic acid, 0.026 M citric acid, and 0.00015 M dodecylmethylamine oxide
Example 1: An aqueous sodium hydroxide solution having a pH 12 and containing 0.01 M monochlorosulfamic acid, 0.026 M citric acid, and 0.00015 M non-amine-based anionic surfactant

### <RO membrane, contaminated RO membrane to be tested, and pure water permeation flux thereof>

An RO membrane (an aromatic polyamide RO membrane "TML10" manufactured by Toray Industries, Inc.) contaminated with organic matter, which had been recovered from a waste water treatment plant was loaded into a flat membrane test apparatus shown in Figs. 1 and 2, and the pure water permeation flux of the contaminated RO membrane was measured under conditions of 0.75 MPa and 25°C.

### <Cleaning test>

Thereafter, the cleaning of the flat membrane test apparatus loaded with this contaminated RO membrane was carried out. That is, each of the above-described cleaning liquids was supplied to the flat membrane test apparatus loaded with the contaminated RO membrane, the container was filled with the cleaning liquid, and immersion cleaning was carried out for 17 hours. After the immersion cleaning, pure water was supplied to extrude the cleaning liquid in the container with the pure water, and then the pure water permeation flux (Flux) of the RO membrane after the cleaning was measured under the same conditions.

The increase rate of the water permeability Flux by cleaning was calculated according to: [Flux of RO membrane after cleaning]/[Flux of contaminated RO membrane before cleaning] × 100%

The results are shown in Table 1.

**[Table 1]**

| | Added chemical drug | Increase rate of water permeability Flux |
|---|---|---|
| Comparative Example 1 | Absent | 119% |
| Comparative Example 2 | Citric acid | 127% |
| Comparative Example 3 | Citric acid + amine oxide-based surfactant | 98% |
| Example 1 | Citric acid + anionic surfactant | 134% |

From Table 1, it can be seen that in Example 1 which uses the cleaning liquid according to the present invention, which is composed of an alkaline aqueous solution containing a chloramine compound, citric acid, and a non-amine-based anionic surfactant, the permeation flux can be sufficiently restored. On the other hand, it has been observed that in Comparative Examples 1 and 2, the recovery rate (increase rate) of the permeation flux is low, and in Comparative Example 3 which uses an amine oxide-based surfactant in combination, the cleaning effect is low as compared with Comparative Example 1 which does not use a surfactant in combination.

The present invention has been described in detail using the specific aspects. However, it will be apparent to those skilled in the art that various modifications are allowed without departing from the intent and scope of the present invention.

This application is based on Japan Patent Application No. 2021-159591, filed September 29, 2021, the entirety of which is incorporated herein by reference.

### [Industrial Applicability]

### [Reference Signs List]

1 Container
2 Flat membrane cell
2A RO membrane
2B Porous support plate
3 Stirrer
4 High pressure pump
5 Stirring bar
6 Pressure gauge
7 Pressure adjusting valve
8 O-ring

## Claims

1. A cleaning agent for aromatic polyamide reverse osmosis membranes, the cleaning agent comprising:
an aqueous solution which has a pH of 13 or more and contains a stabilized halogen, a chelating agent that contains one or more substances selected from among aliphatic carboxylic acids containing no amino group, phosphonic acid compounds containing no amino group, polyphosphoric acids, and salts thereof, and an alkaline agent.

2. The cleaning agent for aromatic polyamide reverse osmosis membranes according to claim 1,
wherein a concentration of the stabilized halogen in the cleaning agent is 0.1 to 0.5 M,
a concentration of the chelating agent is 0.2 to 2 M, and,
a concentration of the alkaline agent is 1 to 5 M.

3. The cleaning agent for aromatic polyamide reverse osmosis membranes according to claim 1 or 2, wherein the stabilized halogen includes monochlorosulfamic acid.

4. The cleaning agent for aromatic polyamide reverse osmosis membranes according to any one of claims 1 to 3, wherein the alkaline agent is at least one of sodium hydroxide and potassium hydroxide.

5. The cleaning agent for aromatic polyamide reverse osmosis membranes according to any one of claims 1 to 4, wherein the cleaning agent contains an anionic surfactant having a molecular weight of less than 1,000, which does not have an amino group or an amine oxide in a molecular structure.

6. The cleaning agent for aromatic polyamide reverse osmosis membranes according to claim 5, wherein a concentration of the anionic surfactant in the aqueous solution is 0.002 to 0.5 M.

7. The cleaning agent for aromatic polyamide reverse osmosis membranes according to any one of claims 1 to 6, wherein the stabilized halogen is a reactant of one or more substances selected from the group consisting of a compound having a primary amino group, ammonia, and an ammonium salt, and hypochlorous acid and/or hypochlorite.

8. A cleaning liquid for aromatic polyamide reverse osmosis membranes, the cleaning liquid comprising:
a diluted aqueous solution of the cleaning agent for aromatic polyamide reverse osmosis membranes according to any one of claims 1 to 7.

9. The cleaning liquid for aromatic polyamide reverse osmosis membranes according to claim 8, wherein a pH of the cleaning liquid is 11 to 13.

10. A cleaning method for aromatic polyamide reverse osmosis membranes, the cleaning method comprising:
a step of bringing an aromatic polyamide reverse osmosis membrane into contact with the cleaning liquid according to claim 8 or 9.
